# EUROPEAN PATENT APPLICATION

(11) **EP 2 894 197 A1**
(43) Date of publication of application: **15.07.2015**
(21) Application number: 13834910.5
(22) Date of filing: 05.09.2013
(51) Int. Cl.: C08L 67/04, C08L 67/00, C08L 77/12, C08J 3/05, C08L 101/16

(54) **AQUEOUS DISPERSION, AND ADDITIVE FOR FRACTURING WORK**

(30) Priority: 07.09.2012 JP 2012196772
(71) Applicant: Mitsui Chemicals, Inc., Tokyo 105-7117 (JP)
(72) Inventor: MAEKAWA, Shintaro, Sodegaura-shi Chiba 299-0265 (JP); HIGUCHI, Chojiro, Sodegaura-shi Chiba 299-0265 (JP); OGAWA, Ryohei, Sodegaura-shi Chiba 299-0265 (JP); KAGAYAMA, Akifumi, Sodegaura-shi Chiba 299-0265 (JP)
(74) Representative: Raynor, Stuart Andrew
(86) International application number: PCT/JP2013/073870
(87) International publication number: WO 2014/038608

(57) **Abstract**

The aqueous dispersion of the present invention is an aqueous dispersion in which a biodegradable resin composition (C) in the form of a fine solid is dispersed in an aqueous medium, and the biodegradable resin composition (C) comprises a copolymer (A) comprising a constituent unit (a-1) derived from a polyvalent carboxylic acid and a constituent unit (a-2) derived from a hydroxycarboxylic acid, and a biodegradable resin (B), and wherein the mass composition ratio [(A)/(B)] of the copolymer (A) to the biodegradable resin (B) is 1/99 to 100/0 provided that the total amount of the copolymer (A) and the biodegradable resin (B) is 100.

## Description

### Field of the Invention

The present invention relates to an aqueous dispersion in which a biodegradable resin composition in the form of a fine solid is dispersed in an aqueous medium, more particularly to an aqueous dispersion suitably used for an oil well or gas well excavating fluid.

### Description of the Related Art

In recovering hydrocarbons such as petroleum and natural gas from earth, a winze such as an oil well and a gas well is excavated.

One method for improving the capacity of this winze is a hydraulic fracturing method in which a fluid is pressed into a winze to fracture a reservoir to form fractures and a supporting material such as a sandy material (proppant) is filled therein, thereby preventing clogging of fractures formed in the reservoir and ensuring a flow channel for collecting petroleum or natural gas.

Conventionally, the majority of the compositions of fracturing fluids used in this hydraulic fracturing method contain water as the main fluid, sand as a proppant, a gelling agent for improving the contingency of a proppant, an acid for dissolving cement and minerals, and various additives such as a friction reducer, a scale inhibitor and a corrosion inhibitor while recently, there is a suggestion on use of an aliphatic polyester such as polyglycolic acid and polylactic acid singly, or together with a dissolution promoter such as an alkali source, as an agent for controlling the flowability of a fracturing fluid or as a proppant.

Such an aliphatic polyester is evaluated as causing low environmental load since it is decomposed by hydrolysis or biodegradation after collecting work of petroleum or natural gas, however, since it is necessary to keep a solid shape during work of recovering petroleum or natural gas, suitable decomposition rate corresponding to the work scale is required.

For example, polyglycolic acid is one of very highly hydrolysable resins, and it is suggested to enhance the molecular weight of this compound to give a flowability controlling agent for larger scale and longer period work (e.g., Patent document 1).

In contrast, polylactic acid shows lower hydrolyzability as compared with polyglycolic acid, thus, it has been difficult to provide a flowability controlling agent showing decomposition rate suitable for a hydraulic fracturing method by using polylactic acid.

### Prior Art Document

### Patent Document

Patent document 1: International Publication WO2012/0501

### Summary of the Invention

### Problem to be Solved by the Invention

The present invention has an object of providing an aqueous dispersion showing decomposition rate suitable for a hydraulic fracturing method and which is suitably used for an oil well or gas well excavating fluid.

### Means for Solving the Problem

The present inventors have intensively studied to solve the above-described problem and resultantly found an aqueous dispersion showing hydrolysis rate controllable in the desired range, leading to completion of the present invention.

That is, the gist of the present invention is as follows:
[1] an aqueous dispersion in which a biodegradable resin composition (C) in the form of a fine solid is dispersed in an aqueous medium, and
   the biodegradable resin composition (C) comprises a copolymer (A) comprising a constituent unit (a-1) derived from a polyvalent carboxylic acid and a constituent unit (a-2) derived from a hydroxycarboxylic acid, and a biodegradable resin (B), and
   wherein the mass composition ratio [(A)/(B)] of the copolymer (A) to the biodegradable resin (B) is 1/99 to 100/0 provided that the total amount of the copolymer (A) and the biodegradable resin (B) is 100.
   The gist of the present invention preferably includes any of the following matters.
[2] The aqueous dispersion described above, wherein the molar composition ratio [(a-1)I(a-2)] of the constituent unit (a-1) to the constituent unit (a-2) in the copolymer (A) is 1/1 to 1/50.
[3] The aqueous dispersion described above, wherein the mass composition ratio [(A)/(B)] of the copolymer (A) to the biodegradable resin (B) is 1/99 to 60/40 provided that the total amount of the copolymer (A) and the biodegradable resin (B) is 100.
[4] The aqueous dispersion described above, wherein the copolymer (A) has a weight-average molecular weight of 1000 to 30000.
[5] The aqueous dispersion described above, wherein the polyvalent carboxylic acid is at least one selected from aspartic acid, malic acid and citric acid.
[6] The aqueous dispersion described above, wherein the biodegradable resin (B) is polylactic acid.
[7] The aqueous dispersion described above, wherein the biodegradable resin composition (C) in the form of a fine solid is a solid having a longitudinal length of 1 µm to 100 mm and having an aspect ratio of 1 to 2000.
[8] An oil well or gas well excavating fluid containing the aqueous dispersion described above.
[9] A hydraulic fracturing method using the aqueous dispersion described above.
[10] An additive for fracturing work composed of a biodegradable resin composition (C) in the form of a fine solid, and
   the biodegradable resin composition (C) comprises a copolymer (A) comprising a constituent unit (a-1) derived from a polyvalent carboxylic acid and a constituent unit (a-2) derived from a hydroxycarboxylic acid, and a biodegradable resin (B), and
   wherein the mass composition ratio [(A)/(B)] of the copolymer (A) to the biodegradable resin (B) is 1/99 to 100/0 provided that the total amount of the copolymer (A) and the biodegradable resin (B) is 100.

### Effect of the Invention

The aqueous dispersion of the present invention can control (e.g., accelerate) the hydrolysis rate of a biodegradable resin composition in the form of a fine solid dispersed in an aqueous medium, in the desired range depending on the scale of a hydraulic fracturing method.

Control of the decomposition rate of an aqueous dispersion in the present invention can be performed simply and flexibly since it can be adjusted by the compounding amount of a copolymer (A), as compared with, for example, control by increase and decrease of the molecular weight of a resin constituting a dispersion and control by the shape and the size of a dispersion.

### Modes for Carrying Out the Invention

The present invention will be illustrated in detail below, but the explanation of the constituting requisite described below is a typical example of embodiments of the present invention and the present invention is not limited to the explained contents.

### [Copolymer (A)]

The copolymer (A) used in the present invention is comprising a constituent unit (a-1) derived from a polyvalent carboxylic acid and a constituent unit (a-2) derived from a hydroxycarboxylic acid. The copolymer (A) may be any of a random copolymer, a block copolymer and a graft copolymer.

The constituent unit (a-1) is a constituent unit derived from a polyvalent carboxylic acid, and is not particularly restricted. The polyvalent carboxylic acid includes preferably compounds having three or more functional groups, and of them, more preferable are aminodicarboxylic acid, hydroxydicarboxylic acid and hydroxytricarboxylic acid, particularly preferable are aspartic acid, malic acid and citric acid. These polyvalent carboxylic acids may be contained singly or different two or more of them may be contained. The constituent unit derived from a polyvalent carboxylic acid may form a ring structure such as an imide ring, and the ring structure may be ring-opened, alternatively, these may present in admixture.

The constituent unit (a-2) is a constituent unit derived from a hydroxycarboxylic acid, and is not particularly restricted. Among them, preferable are constituent units derived from α-hydroxycarboxylic acids such as glycolic acid, lactic acid, 2-hydroxybutyric acid, 2-hydroxyvaleric acid, 2-hydroxycaproic acid and 2-hydroxycapric acid; or glycolide, lactide, p-dioxanone, β-propiolactone, β-butyrolactone, δ-valerolactone or ε-caprolactone, more preferable are constituent units derived from lactic acid or lactide.

"Constituent unit derived from a polyvalent carboxylic acid" in the present invention is a constituent unit derived substantially only from a polyvalent carboxylic acid, and it does not denote a constituent unit derived from a polycondensate of a polyvalent carboxylic acid with other compound than a polyvalent carboxylic acid, e.g., a polyester segment derived from a condensate of a dicarboxylic acid with a diol. "Constituent unit derived from a hydroxycarboxylic acid" in the present invention is a constituent unit derived only from a hydroxycarboxylic acid, and it does not denote a constituent unit derived from a polycondensate of a hydroxycarboxylic acid with other compound than a hydroxycarboxylic acid.

The copolymer (A) is a copolymer comprising the constituent unit (a-1) and the constituent unit (a-2) explained above, and it is not particularly restricted. Particularly, an aspartic acid-lactic acid copolymer, a malic acid-lactic acid copolymer and a citric acid-lactic acid copolymer are preferable.

The molar composition ratio [(a-1)I(a-2)] of the constituent unit (a-1) to the constituent unit (a-2) in the copolymer (A) is preferably 1/1 to 1/50, more preferably 1/3 to 1/30, particularly preferably 1/5 to 1/20 in terms of the charging amount in polymerizing. When the molar composition ratio is in these ranges, a copolymer excellent in an effect of promoting decomposition rate and also excellent in compatibility with a biodegradable resin (B) is obtained.

In the copolymer (A), a constituent unit other than the constituent unit (a-1) and the constituent unit (a-2) (unit derived from other copolymerization component) may be present. Here, its amount is required to be an extent not significantly deteriorating the nature of the copolymer (A). From this standpoint, its amount is preferable to be 0 to 20 mol % in 100 mol % of all constituent units in the copolymer (A).

The copolymer (A) has a weight-average molecular weight of 1000 to 100000, preferably 1000 to 30000, more preferably 2500 to 20000, particularly preferably 2500 to 10000. This weight-average molecular weight is a value measured by gel permeation chromatography (GPC) under conditions described in examples described later.

The method of producing the copolymer (A) is not particularly restricted. In general, it can be obtained by mixing a polyvalent carboxylic acid and a hydroxycarboxylic acid at desired ratio and dehydration-polycondensing them under reduced pressure with heat in the presence or absence of a catalyst. It can also be obtained by reacting a polyvalent carboxylic acid with an anhydrous cyclic compound of a hydroxycarboxylic acid such as lactide, glycolide and caprolactone. If a ring structure such as an amide ring is formed in the copolymer (A), a step of ring-opening this may exist.

As specific examples of the copolymer (A), copolymers described in, for example, JP-A No. 2000-159888 may be used.

### [Biodegradable resin (B)]

The biodegradable resin (B) used in the present invention is a resin having biodegradability, and is not particularly restricted. For example, polyhydroxycarboxylic acids and aliphatic polyester resins composed of a diol and a dicarboxylic acid can be used. Here, the biodegradable resin (B) used in the present invention is a resin different from the copolymer (A).

In the present invention, the polyhydroxycarboxylic acid means a polymer or copolymer having a repeating unit (constituent unit) derived from a hydroxycarboxylic acid having a hydroxyl group and a carboxyl group together.

Specific examples of the hydroxycarboxylic acid include lactic acid, glycolic acid, 3-hydroxybutyric acid, 4-hydroxybutyric acid, 2-hydroxy-n-butyric acid, 2-hydroxy-3,3-dimethylbutyric acid, 2-hydroxy-3-methylbutyric acid, 2-methyllactic acid, 2-hydroxyvaleric acid, 2-hydroxycaproic acid, 2-hydroxylauric acid, 2-hydroxymyristic acid, 2-hydroxypalmitic acid, 2-hydroxystearic acid, malic acid, citric acid, tartaric acid, 2-hydroxy-3-methylbutyric acid, 2-cyclohexyl-2-hydroxyacetic acid, mandelic acid, salicylic acid, and ring-opened products of lactones such as caprolactone. Two or more of them may be mixed and used.

The polyhydroxycarboxylic acid may have other constituent unit (copolymerization component) than a hydroxycarboxylic acid providing the nature as the biodegradable resin (B) is not deteriorated, and the amount of the constituent unit derived from a hydroxycarboxylic acid is preferably 20 mol % or more, more preferably 50 mol % or more, particularly preferably 100 mol % in 100 mol % of all constituent units in the polyhydroxycarboxylic acid.

Among polyhydroxycarboxylic acids, polymers or copolymers in which the hydroxycarboxylic acid is lactic acid are preferable, and polylactic acid (homopolymer) is more preferable, from the standpoint of compatibility with the copolymer (A). Polylactic acid may be synthesized from lactic acid as a starting material or may be synthesized from lactide as a starting material.

In the present invention, the aliphatic polyester resin composed of a diol and a dicarboxylic acid means a polymer or copolymer having a repeating unit (constituent unit) derived from a diol and a dicarboxylic acid, and may have other constituent unit (copolymerization component) than an aliphatic polyester composed of a diol and a dicarboxylic acid providing the nature as the biodegradable resin (B) is not deteriorated.

Specific examples of the aliphatic polyester resin composed of a diol and a dicarboxylic acid include polyethylene succinate, polyethylene adipate, polyethylene sebacate, polydiethylene succinate, polydiethylene adipate, polyethylene succinate adipate, polydiethylene sebacate, polybutylene succinate, polybutylene adipate, polybutylene succinate adipate and polybutylene sebacate.

The molecular weight of the biodegradable resin (B) is not particularly restricted. The weight-average molecular weight of the biodegradable resin (B) is preferably 1000 to 2000000, more preferably 3000 to 1000000, particularly preferably 5000 to 500000, in view of easiness of mixing with the copolymer (A). This weight-average molecular weight is a value measured by gel permeation chromatography (GPC) under conditions described in examples described later.

### [Biodegradable resin composition (C)]

The biodegradable resin composition (C) of the present invention is obtained by mixing the copolymer (A) and the biodegradable resin (B). The mass composition ratio [(A)/(B)] thereof is 1/99 to 100/0, preferably 1/99 to 80/20, more preferably 1/99 to 60/40, particularly preferably 5/95 to 55/45 provided that the total amount of the copolymer (A) and the biodegradable resin (B) is 100. When the mass composition ratio is in these ranges, an effect of promoting decomposition rate by the copolymer (A) is manifested and is preferable while maintaining the nature of the biodegradable resin (B) if the biodegradable resin (B) is contained. When the amount of the copolymer (A) is larger, a resin composition showing higher decomposition rate is obtained.

The method of mixing the biodegradable resin (B) with the copolymer (A) is not particularly restricted. Preferably, both compounds are melt-kneaded, or are dissolved in a solvent and mixed with stirring. The copolymer (A) and the biodegradable resin (B) manifest extremely excellent compatibility, and a uniform resin composition can be obtained easily from them.

The biodegradable resin composition (C) of the present invention may contain polymers other than the copolymer (A) and the biodegradable resin (B) and additives which can be added to usual resins, in a range not significantly deteriorating the nature of the biodegradable resin (B).

The molecular weight of the biodegradable resin composition (C) is not particularly restricted. The weight-average molecular weight of the biodegradable resin composition (C) is preferably 1000 to 1000000, more preferably 5000 to 500000, particularly preferably 50000 to 300000, in view of moldability. This weight-average molecular weight is a value measured by gel permeation chromatography (GPC) under conditions described in examples described later.

The biodegradable resin (C) of the present invention can be processed into a fine solid, to give an additive for fracturing work.

### [Aqueous dispersion]

The aqueous dispersion of the present invention is obtained by dispersing into an aqueous medium the biodegradable resin composition (C) in the form of a fine solid.

The fine solid may have any shape such as a particle, a fiber and a film provided that it is solid, and a solid having a longitudinal length of 1 µm to 100 mm and an aspect ratio of 1 to 2000 can be used.

When the fine solid according to the present invention is a particle, for example, a fine particle having a major axis of 1 µm to 1 mm can be used. In the case of a fine particle, it is preferable that its aspect ratio is generally 1 to 10. In the case of a fiber, for example, a short fiber having a longitudinal length of 1 mm to 100 mm and having an aspect ratio of 10 to 2000 can be used. In the case of a film fragment obtained by finely cutting a sheet or a film, a film fragment having an area of 0.01 to 10 cm² and a thickness of 1 to 500 µm can be obtained. As the fine solid according to the present invention, two or more solids having different shapes and/or sizes may be used in combination.

The method of producing the fine solid according to the present invention is not particularly restricted, and in the case of a fine particle, known production and molding methods by a pulverizing treatment under cool can be adopted.

The aqueous medium according to the present invention is a liquid medium containing water in an amount of at least 10% or more. As the other components than water, use is made of aliphatic alcohols such as methanol, ethanol and ethylene glycol; polyalcohols such as glycerin and polyglycerin; aliphatic alkanes such as hexane, heptane and octane; ketones such as acetone; ethers such as diethyl ether; and polyethers such as polyethylene glycol; from the standpoint of dispersibility.

The proportion of the biodegradable resin composition (C) in the form of a fine solid to the aqueous medium in the aqueous dispersion of the present invention is not particularly restricted, and in the case of use as an oil well or gas well excavating fluid, the amount of the biodegradable resin composition (C) in the form of a fine solid is preferably 0.01 to 30 g per liter of the aqueous medium.

When the aqueous dispersion of the present invention is used as an oil well or gas well excavating fluid, the aqueous dispersion of the present invention may contain various additives used in known oil well or gas well excavating fluids. Examples thereof include flowability controlling agents other than the biodegradable resin composition (C) according to the present invention, proppants, gravels, inorganic well wall and mud wall reinforcing materials such as calcium carbonate; collapse inhibitors such as KCI; specific gravity adjusting agents such as alkali metal halides or alkaline earth metal halides (for example, CaBr₂, CaCl₂); organic colloid agents such as guar gum; or organic well wall and mud wall reinforcing materials, inorganic colloid agents, dispersing deflocculants, surfactants, lost circulation inhibitors, de-forming agents, corrosion inhibitors and biocides. These are contained in the aqueous dispersion in a concentration according to the function and the geological layer as the work subject.

When the aqueous dispersion of the present invention is used as an oil well or gas well excavating fluid, the aqueous dispersion may be previously prepared before casting into a winze, or components of the fluid may be separately cast into a winze and processed to form an aqueous dispersion on site (in the winze).

### Examples

The present invention will be described in detail by examples below, but the present invention is not limited to them. The method of measuring a physical value and the method of preparing a copolymer shown in examples are as described below.

### <Measurement of weight-average molecular weight (Mw)>

A sample was dissolved in a solvent (concentration: 0.5% by mass) and its weight-average molecular weight (Mw) was measured by gel permeation chromatography (GPC). GPC System manufactured by Waters was used as the measurement apparatus, LF-G, LF-804 manufactured by SHODEX was used as the column, and 2414 manufactured by Waters was used for RI detection. Chloroform was used as the solvent, polystyrene was used as the standard substance, and measurement was performed at a flow rate of 1.0 ml/min.

### <Fine particle preparation method>

About 10 g of a resin sample was cast, together with double weight of liquid nitrogen, into a freeze pulverizer manufactured by AS ONE Corporation (model number: TPH-01), pulverized for 1 minute, and the resultant fine particulate sample was applied to a sieve having an aperture of 840 µm and the sample was recovered.

### <Weight retention>

About 1 g of a fine particulate resin sample was weighed and dispersed in 50 ml of water in a screw bottle manufactured by AS ONE Corporation (model number: No.8), and preserved for prescribed time at a constant temperature of 80°C. Thereafter, the content liquid was all poured on filter paper, and a solid on the filter paper was dried for 1 day at room temperature under a nitrogen atmosphere, then, dried for 1 day under a nitrogen atmosphere at 80°C. The weight retentions (%) at every prescribed time were determined by measuring the weight of the solid sample after drying.

### <Preparation Example 1: aspartic acid-lactic acid copolymer (PALS1/5)>

Into a 500 ml glass reactor vessel equipped with a stirring apparatus and a deaeration port were charged 13.3 g (0.1 mol) of L-aspartic acid manufactured by Wako Pure Chemical Industries, Ltd., 50.1 g (0.5 mol) of 90% L-lactic acid manufactured by Purac and 18.5 mg (0.0016 mol) of titanium tetraisopropoxide manufactured by Wako Pure Chemical Industries, Ltd. In this case, the molar ratio of aspartic acid to lactic acid charged was 1:5. The reactor vessel was soaked in an oil bath, and the mixture was stirred for 30 hours while allowing nitrogen to pass through at 160°C. The powder disappeared gradually in about 30 minutes to 1 hour, and the reaction liquid revealed yellow coloration. The reactor vessel was removed from the oil bath, and the reaction solution was taken out onto a stainless bat and cooled to solidify. The resultant pale yellowish-brown transparent solid was pulverized, to obtain 32 g of a powdery polymer. The polymer had a Mw of 6200.

### <Preparation Example 2: aspartic acid-lactic acid copolymer (PALS1/10)>

Into the same glass reactor vessel as in Preparation Example 1 were charged 13.3 g (0.1 mol) of L-aspartic acid manufactured by Wako Pure Chemical Industries, Ltd., 100.2 g (1.0 mol) of 90% L-lactic acid manufactured by Purac and 18.5 mg (0.0016 mol) of titanium tetraisopropoxide manufactured by Wako Pure Chemical Industries, Ltd. In this case, the molar ratio of aspartic acid to lactic acid charged was 1:10. The reactor vessel was soaked in an oil bath, and the mixture was stirred for 30 hours while allowing nitrogen to pass through at 160°C. The powder disappeared gradually in about 30 minutes to 1 hour, and the reaction liquid revealed yellow coloration. The reactor vessel was removed from the oil bath, and the reaction solution was taken out onto a stainless bat and cooled to solidify. The resultant pale yellowish-brown transparent solid was pulverized, to obtain 63 g of a powdery polymer. The polymer had a Mw of 7300.

### <Preparation Example 3: malic acid-lactic acid copolymer (PMLS1/10)>

Into the same glass reactor vessel as in Preparation Example 1 were charged 13.4 g (0.1 mol) of D,L-malic acid manufactured by Wako Pure Chemical Industries, Ltd., 100.2 g (1.0 mol) of 90% L-lactic acid manufactured by Purac and 18.5 mg (0.0016 mol) of titanium tetraisopropoxide manufactured by Wako Pure Chemical Industries, Ltd. In this case, the molar ratio of malic acid to lactic acid charged was 1:10. The reactor vessel was soaked in an oil bath, and the mixture was stirred for 30 hours while allowing nitrogen to pass through at 135°C under 10 mmHg. The reactor vessel was removed from the oil bath, and the reaction solution was taken out onto a stainless bat and cooled to solidify. The resultant colorless transparent solid was pulverized, to obtain 65 g of a powdery polymer. The polymer had a Mw of 3300.

### <Preparation Example 4: citric acid-lactic acid copolymer (PCLS1/10)>

Into the same glass reactor vessel as in Preparation Example were charged 21.0 g (0.1 mol) of citric acid mono-hydrate manufactured by Wako Pure Chemical Industries, Ltd., 100.2 g (1.0 mol) of 90% L-lactic acid manufactured by Purac and 18.5 mg (0.0016 mol) of titanium tetraisopropoxide manufactured by Wako Pure Chemical Industries, Ltd. In this case, the molar ratio of citric acid to lactic acid charged was 1:10. The reactor vessel was soaked in an oil bath, and the mixture was stirred for 28 hours while allowing nitrogen to pass through at 160°C under 10 mmHg. The reactor vessel was removed from the oil bath, and the reaction solution was taken out onto a stainless bath and cooled to solidify. The resultant colorless transparent solid was pulverized, to obtain 63 g of a powdery polymer. The polymer had a Mw of 2600.

### [Example 1]

To 54 g of polylactic acid (LACEA H-400 manufactured by Mitsui Chemicals, Inc.) was added 6 g of the aspartic acid-lactic acid copolymer obtained in Preparation Example 1 (molar ratio of aspartic acid to lactic acid, 1:5), and the mixture was kneaded for 10 minutes using Laboplastomill 20C200 manufactured by Toyo Seiki Seisaku-Sho, Ltd. under conditions of a temperature of 180°C and a rotation frequency of 50 rpm. The resultant kneaded resin was frozen-pulverized to prepare a fine particulate sample, and 1 g of this fine particle was dispersed in 50 ml of ion exchanged water in a glass vessel, to obtain a dispersion. The resultant dispersion was kept in a constant temperature chamber of 80°C for 12 hours, 72 hours and 168 hours, then, the weight retentions were determined for solid components remaining at respective times by the above-described method. The evaluation results are shown in Tables 1 and 2.

### [Example 2]

A sample was prepared and the decomposition property thereof was evaluated in the same manner as in Example 1 excepting that the amount of polylactic acid was changed to 48 g and the amount of the aspartic acid-lactic acid copolymer obtained in Preparation Example 1 was changed to 12 g. The evaluation results are shown in Tables 1 and 2.

### [Example 3]

A sample was prepared and the decomposition property thereof was evaluated in the same manner as in Example 1 excepting that the amount of polylactic acid was changed to 30 g and the amount of the aspartic acid-lactic acid copolymer obtained in Preparation Example 1 was changed to 30 g. The evaluation results are shown in Tables 1 and 2.

### [Example 4]

A sample was prepared and the decomposition property thereof was evaluated in the same manner as in Example 1 excepting that the amount of polylactic acid was changed to 54 g and 6 g of the aspartic acid-lactic acid copolymer obtained in Preparation Example 2 (molar ratio of aspartic acid to lactic acid, 1:10) was used instead of the aspartic acid-lactic acid copolymer obtained in Preparation Example 1 (molar ratio of aspartic acid to lactic acid, 1:5). The evaluation results are shown in Tables 1 and 2.

### [Example 5]

A sample was prepared and the decomposition property thereof was evaluated in the same manner as in Example 1 excepting that the amount of polylactic acid was changed to 48 g and the amount of the aspartic acid-lactic acid copolymer obtained in Preparation Example 2 was changed to 12 g. The evaluation results are shown in Tables 1 and 2.

### [Example 6]

A sample was prepared and the decomposition property thereof was evaluated in the same manner as in Example 1 excepting that the amount of polylactic acid was changed to 30 g and the amount of the aspartic acid-lactic acid copolymer obtained in Preparation Example 2 was changed to 30 g. The evaluation results are shown in Tables 1 and 2.

### [Example 7]

A sample was prepared and the decomposition property thereof was evaluated in the same manner as in Example 1 excepting that the amount of polylactic acid was changed to 54 g and 6 g of the malic acid-lactic acid copolymer obtained in Preparation Example 3 (molar ratio of malic acid to lactic acid, 1:10) was used instead of the aspartic acid-lactic acid copolymer obtained in Preparation Example 1 (molar ratio of aspartic acid to lactic acid, 1:5). The evaluation results are shown in Tables 1 and 2.

### [Example 8]

A sample was prepared and the decomposition property thereof was evaluated in the same manner as in Example 1 excepting that the amount of polylactic acid was changed to 48 g and the amount of the malic acid-lactic acid copolymer obtained in Preparation Example 3 was changed to 12 g. The evaluation results are shown in Tables 1 and 2.

### [Example 9]

A sample was prepared and the decomposition property thereof was evaluated in the same manner as in Example 1 excepting that the amount of polylactic acid was changed to 54 g and 6 g of the citric acid-lactic acid copolymer obtained in Preparation Example 4 (molar ratio of citric acid to lactic acid, 1:10) was used instead of the aspartic acid-lactic acid copolymer obtained in Preparation Example 1 (molar ratio of aspartic acid to lactic acid, 1:5). The evaluation results are shown in Tables 1 and 2.

### [Example 10]

A sample was prepared and the decomposition property thereof was evaluated in the same manner as in Example 1 excepting that the amount of polylactic acid was changed to 48 g and the amount of the citric acid-lactic acid copolymer obtained in Preparation Example 4 was changed to 12 g. The evaluation results are shown in Tables 1 and 2.

### [Comparative Example 1]

A sample was prepared and the decomposition property thereof was evaluated in the same manner as in Example 1 excepting that only polylactic acid was used. The evaluation results are shown in Tables 1 and 2.

**[Table 1]**

| | Fine Particulate Sample | Weight Retention (%) after Hydrolysis Test | | | |
|---|---|---|---|---|---|
| | | 0 hr | 12 hr | 72 hr | 168 hr |
| Ex. 1 | PLA 90%+PALS1/5 10% | 100 | 95.5 | 83.9 | 71.0 |
| Ex. 2 | PLA 80%+PALS1/5 20% | 100 | 94.6 | 76.0 | 64.5 |
| Ex. 3 | PLA 50%+PALS1/5 50% | 100 | 88.4 | 54.8 | 49.7 |
| Ex. 4 | PLA 90%+PALS1/10 10% | 100 | 96.8 | 85.4 | 74.8 |
| Ex. 5 | PLA 80%+PALS1/10 20% | 100 | 96.7 | 77.8 | 66.3 |
| Ex. 6 | PLA 50%+PALS1/10 50% | 100 | 90.4 | 52.7 | 46.7 |
| Ex. 7 | PLA 90%+PMLS1/10 10% | 100 | 94.0 | 82.9 | 74.5 |
| Ex. 8 | PLA 80%+PMLS1/10 20% | 100 | 91.8 | 75.2 | 66.2 |
| Ex. 9 | PLA 90%+PCLS1/10 10% | 100 | 93.8 | 82.7 | 46.6 |
| Ex.10 | PLA 80%+PCLS1/10 20% | 100 | 91.6 | 74.8 | 65.9 |
| Comp. Ex.1 | PLA 100% | 100 | 98.4 | 98.1 | 83.3 |

**[Table 2]**

| | Fine Particulate Sample | Molecular Weight Retention (%) after Hydrolysis Test | | | |
|---|---|---|---|---|---|
| | | 0 hr | 12 hr | 72 hr | 168 hr |
| Ex. 1 | PLA 90%+PALS1/5 10% | 100 | 37.4 | 7.6 | 3.5 |
| Ex. 2 | PLA 80%+PALS1 /5 20% | 100 | 29.5 | 6.5 | 3.2 |
| Ex. 3 | PLA 50%+PALS1/5 50% | 100 | 25.4 | 6.2 | 3.0 |
| Ex. 4 | PLA 90%+PALS1/10 10% | 100 | 38.2 | 7.1 | 3.5 |
| Ex. 5 | PLA 80%+PALS1/10 20% | 100 | 32.1 | 6.5 | 3.4 |
| Ex. 6 | PLA 50%+PALS1/10 50% | 100 | 29.8 | 5.6 | 3.2 |
| Ex. 7 | PLA 90%+PMLS1/10 10% | 100 | 28.5 | 7.1 | 4.0 |
| Ex. 8 | PLA 80%+PMLS1/10 20% | 100 | 23.5 | 6.6 | 3.3 |
| Ex. 9 | PLA 90%+PCLS1/10 10% | 100 | 28.4 | 7.1 | 3.9 |
| Ex. 10 | PLA 80%+PCLS1/10 20% | 100 | 23.4 | 6.5 | 3.2 |
| Comp. Ex. 1 | PLA 100% | 100 | 77.5 | 14.0 | 4.7 |

As shown in Tables 1 and 2, it is understood that the fine particular samples according to Examples 1 to 10 obtained by compounding the copolymer (A) into polylactic acid are excellent in decomposing property as compared with the fine particulate sample containing no compounded material other than polylactic acid according to Comparative Example 1, and its decomposing property can be controlled by the amount of a decomposition promoter.

### Industrial Applicability

The aqueous dispersion of the present invention shows excellent decomposition rate as compared with those containing only polylactic acid, and suppression and recovery of liquid permeability can be controlled in desired time by changing the formulated amount of a decomposition promoter according to the excavating work time, thus, this aqueous dispersion can be suitably used as a flowability controlling agent in excavating work and fracturing work.

## Claims

1. An aqueous dispersion in which a biodegradable resin composition (C) in the form of a fine solid is dispersed in an aqueous medium, and
the biodegradable resin composition (C) comprises a copolymer (A) comprising a constituent unit (a-1) derived from a polyvalent carboxylic acid and a constituent unit (a-2) derived from a hydroxycarboxylic acid, and a biodegradable resin (B), and
wherein the mass composition ratio [(A)/(B)] of the copolymer (A) to the biodegradable resin (B) is 1/99 to 100/0 provided that the total amount of the copolymer (A) and the biodegradable resin (B) is 100.

2. The aqueous dispersion according to Claim 1, wherein the molar composition ratio [(a-1)/(a-2)] of the constituent unit (a-1) to the constituent unit (a-2) in the copolymer (A) is 1/1 to 1/50.

3. The aqueous dispersion according to Claim 1, wherein the mass composition ratio [(A)/(B)] of the copolymer (A) to the biodegradable resin (B) is 1/99 to 60/40 provided that the total amount of the copolymer (A) and the biodegradable resin (B) is 100.

4. The aqueous dispersion according to Claim 1, wherein the copolymer (A) has a weight-average molecular weight of 1,000 to 30,000.

5. The aqueous dispersion according to Claim 1, wherein the polyvalent carboxylic acid is at least one selected from aspartic acid, malic acid and citric acid.

6. The aqueous dispersion according to Claim 1, wherein the biodegradable resin (B) is polylactic acid.

7. The aqueous dispersion according to Claim 1, wherein the biodegradable resin composition (C) in the form of a fine solid is a solid having a longitudinal length of 1 µm to 100 mm and having an aspect ratio of 1 to 2000.

8. An oil well or gas well excavating fluid comprising the aqueous dispersion as described in Claim 1.

9. A hydraulic fracturing method using the aqueous dispersion as described in Claim 1.

10. An additive for fracturing work composed of a biodegradable resin composition (C) in the form of a fine solid, and
the biodegradable resin composition (C) comprises a copolymer (A) comprising a constituent unit (a-1) derived from a polyvalent carboxylic acid and a constituent unit (a-2) derived from a hydroxycarboxylic acid, and a biodegradable resin (B), and
wherein the mass composition ratio [(A)/(B)] of the copolymer (A) to the biodegradable resin (B) is 1/99 to 100/0 provided that the total amount of the copolymer (A) and the biodegradable resin (B) is 100.
